# EUROPÄISCHE PATENTSCHRIFT

(11) **EP 1 427 610 B1**
(45) Veröffentlichungstag und Bekanntmachung des Hinweises auf die Patenterteilung: **02.11.2005**
(21) Anmeldenummer: 02754541.7
(22) Anmeldetag: 17.08.2002
(51) Int. Cl.: B60R 21/01

(54) **SENSOR ZUR SITZBELEGUNGSERKENNUNG**
SENSOR FOR RECOGNITION OF SEAT OCCUPANCY
DETECTEUR POUR IDENTIFIER L'OCCUPATION D'UN SIEGE

(30) Priorität: 12.09.2001 DE 10144877
(43) Veröffentlichungstag der Anmeldung: 16.06.2004
(73) Patentinhaber: ROBERT BOSCH GMBH, 70442 Stuttgart (DE)
(72) Erfinder: JAKOBY, Bernhard, A-1180 Wien (AT); ARNDT, Michael, 72762 Reutlingen (DE)
(86) Internationale Anmeldenummer: PCT/DE2002/003034
(87) Internationale Veröffentlichungsnummer: WO 2003/024749

(56) Entgegenhaltungen:
- EP-A- 0 419 047
- DE-A- 19 740 732
- DE-A- 19 959 276
- BILLEN K: "Occupant Classification System for Smart Restraint Systems" SAE PAPER 1999-01-0761, XX, XX, Januar 1999 (1999-01), Seiten 33-38, XP002184965

## Beschreibung

### Stand der Technik

Die Erfindung geht aus von einem Sensor zur Sitzbelegungserkennung nach der Gattung des unabhängigen Patentanspruchs.

Aus der Offenlegungsschrift WO 99/39168 A1(Oberbegriff von Anspruch 1) ist ein drucksensibler Flächensensor bekannt, bei dem durch drucksensitive Elemente, die in einem Fahrzeugsitz angeordnet sind, in Abhängigkeit von einem auf den Sitz aufgeprägten Druck, beispielsweise durch eine sitzende Person, ein Signal abgegeben wird.

### Vorteile der Erfindung

Der erfindungsgemäße Sensor zur Sitzbelegungserkennung mit den Merkmalen des unabhängigen Patentanspruchs hat demgegenüber den Vorteil, dass durch eine drahtlose Abfrage des Sensors durch ein Steuergerät und die passiver Ausführung des Sensors ein einfaches Austauschen des Sensors ermöglicht wird, wobei die Abfrageelektronik beibehalten werden kann. Unter passiv wird hier verstanden, dass der Sensor keine eigenen Leistungsquellen aufweist, sondern die empfangene Energie auch dazu nutzen muß, um die Sensorinformation wieder zurückzusenden. Es ist also ein passiver Transceiver.

Dies bedeutet, dass der Sensor selber keine Energieversorgung aufweist und nur durch die empfangene elektrische Energie die notwendige Energie erhält, um die Messung durchzuführen. Gleichzeitig wird diese Energie dann auch wieder verwendet, um das Messergebnis abzustrahlen. Daher sind auch beim erfindungsgemäßen Sensor entsprechende Filter vorzusehen, oder die Antenne des Sensors ist entsprechend auf die Empfangs- und Sendefrequenz auszurichten. Es ist auch möglich, mehr als eine Antenne zu verwenden.

Dieser Sensor ist außerdem robust und kostengünstig, da keine Energieversorgung in den Fahrzeugsitz vorzusehen ist.

Insbesondere ist bei herausnehmbaren Sitzen wie bei Sport U-tility Vehicles (SUV) keine aufwendige Daten- und/oder Energieübertragung vom Chassis zum Sitz vorzusehen. Darüber hinaus ist durch den erfindungsgemäßen Sensor ein besonders robustes und kostengünstiges System vorhanden, da keine aktiven Elemente in dem erfindungsgemäßen Sensor enthalten sind.

Durch die in den abhängigen Ansprüchen aufgeführten Maßnahmen und Weiterbildungen sind vorteilhafte Verbesserungen des im unabhängigen Patentanspruch angegebenen Sensors zur Sitzbelegungserkennung möglich.

Die Antenne ist in einer Weiterbildung insbesondere für ein Hochfrequenzsignal ausgelegt.

Weiterhin ist es von Vorteil, dass das Sensierungselement des Sensors als ein akustisches Oberflächenwellenbauelement, also als ein SAW (Service Accustik Wave-Sensor) ausgebildet ist. Vorteilhaft bei diesen Sensoren ist insbesondere die Möglichkeit, damit die passive drahtlose Abfrage durchzuführen. Insbesondere durch die Verwendung einer Interdigitalstruktur, also eines Interdigitalwandlers (Interdigital Transducer), und die Verwendung einer Verzögerungsleitung, hier einer drahtlosen akustischen Verzögerungsleitung, sowie einem Reflektor, der beispielsweise ebenfalls als Interdigitalwandler ausgebildet ist, wird eine einfache Realisierungsmöglichkeit für den erfindungsgemäßen Sensor vorgeschlagen.

Alternativ ist es von Vorteil, dass drahtlos auslesbare elektrische Resonatoren, insbesondere LC-Resonatoren, die planar ausgebildet sind, verwendet werden. Solche Sensoren bestehen aus einem Resonanzkreis, der von einer Spule und einem Kondensator gebildet wird, die beispielsweise in Dickschichttechnik auf einem Keramikplättchen aufgebracht werden.

Weiterhin ist es von Vorteil, dass der Sensor ein Feld von Sensierungselementen aufweist. Dabei kann es sein, dass entweder eine gemeinsame Antenne vorhanden ist oder das unterschiedliche Sensierungselemente jeweils eine eigene Antenne aufweisen, so dass ein Druckprofil des Fahrzeugsitzes abfragbar ist. Dies kann insbesondere dadurch realisiert sein, dass die einzelnen Antennen auf unterschiedliche Frequenzen abgestimmt sind. Doch auch andere Codierungsmaßnahmen sind hier möglich, um die einzelnen Sensierungselemente anzusprechen. Denn vor allem die Aufnahmen eines Druckprofils durch die Sensierungselemente lässt erweiterte Aussagen über die Belegung eines Sitzes zu. Dies kann zur Unterscheidung zwischen Gegenständen und Personen und zur Klassifizierung von Personen verwendet werden.

Darüber hinaus ist es von Vorteil, dass ein Steuergerät für den erfindungsgemäßen Sensor vorliegt, das eine Antenne zur Abgabe der Abfrage und zum Empfang des Signals aufweist. Auch hier ist es möglich, dass mehr als eine Antenne verwendet wird. Weiterhin weist das erfindungsgemäße Steuergerät auch eine Sende- /Empfangsstation auf, die auf ein Signal des Prozessors des Steuergeräts hin einen Abfrageimpuls im Hochfrequenzbereich abgibt. Diesen Abfrageimpuls empfängt dann der erfindungsgemäße Sensor.

Schließlich ist es auch von Vorteil, dass eine Vorrichtung zur Sitzbelegungserkennung vorliegt, die sowohl den erfindungsgemäßen Sensor als auch das erfindungsgemäße Steuergerät umfasst.

### Zeichnung

Ausführungsbeispiele der Erfindung sind in der Zeichnung dargestellt und werden in der nachfolgenden Beschreibung näher erläutert. Es zeigt Figur 1 ein Blockschaltbild der erfindungsgemäßen Vorrichtung, Figur 2 eine schematische Darstellung des erfindungsgemäßen Sensors, Figur 3 eine zweite schematische Darstellung des erfindungsgemäßen Sensors und Figur 4 die Konfiguration des erfindungsgemäßen Sensors im Fahrzeugsitz.

### Beschreibung

Für verschiedene Anwendungen beispielsweise für eine in einem Crash notwendige Ansteuerung einer Steuereinrichtung für Rückhaltemittel werden Sitzbelegungssensoren vorgeschlagen. Insbesondere werden auch zunehmend solche Fahrzeuge verwendet, die herausnehmbare Sitze aufweisen, so dass eine drahtlose Übertragung oder eine einfache leitungsgebundene Verbindung zu dem Sitz notwendig ist, um die Elektronik, die im Sitz angeordnet ist, mit elektrischer Energie zu versorgen bzw. die Signale abzufragen bzw. Steuersignale zu dieser Elektronik zu übertragen.

Erfindungsgemäß wird nun vorgeschlagen, im Sitz einen passiven Sensor zur Sitzbelegungserkennung anzuordnen, der auf den Sitz aufgebrachten Druck in ein Signal erzeugt, das von einem Steuergerät drahtlos abgefragt wird und dann auch wieder empfangen wird. Insbesondere die Verwendung von akustischen Oberflächenwellenbauelementen wie einem SAW oder planaren LC-Resonatoren ermöglicht die Ausgestaltung als ein passiven Sensor, der keine eigene Energieversorgung benötigt.

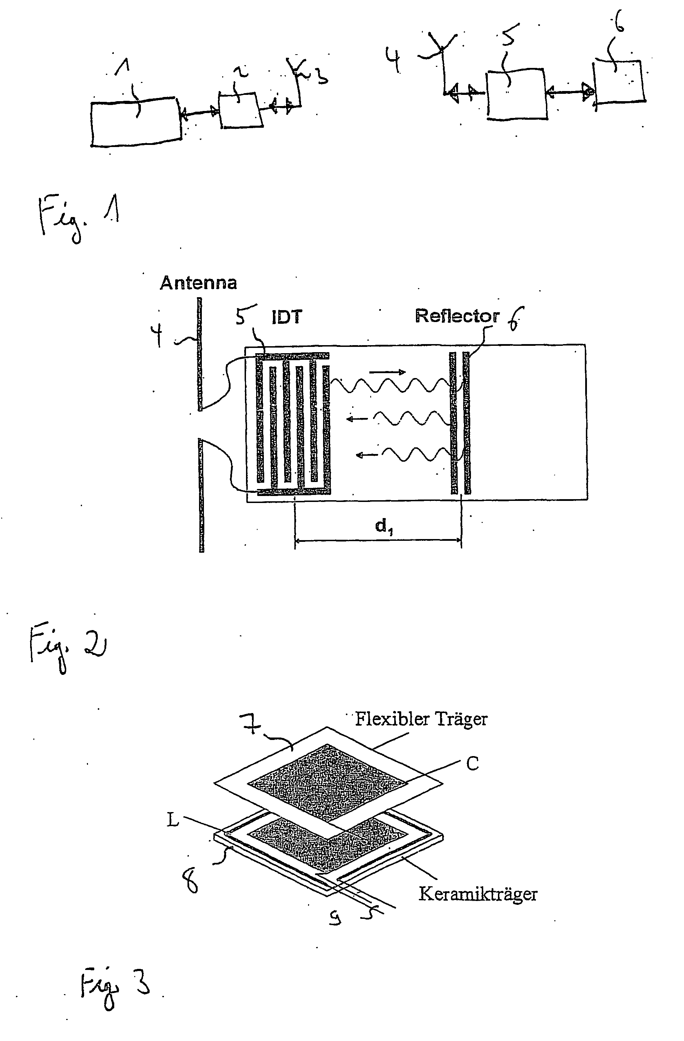

Figur 1 zeigt als Blockschaltbild die erfindungsgemäße Vorrichtung zur Sitzbelegungserkennung. Ein Steuergerät weist einen Prozessor 1 auf, der über einen Datenein- /ausgang mit einer Sende- /Empfangsvorrichtung 2 verbunden ist, an deren Ein- /Ausgang wiederum eine Antenne 3 angeschlossen ist. Der Prozessor 1 ist über weitere Leitungen, die hier der Einfachheit halber nicht dargestellt sind, mit anderen Komponenten verbunden, um seine Steuerfunktion auszuführen. Ein erfindungsgemäßer Sensor weist hier eine Antenne 4 auf, die an einem Ein- /Ausgang eines Sensierungselements 5 angeschlossen ist, das wiederum über einen Ein- /Ausgang mit einem Reflektor verbunden ist. Dieser Reflektor weist das Bezugszeichen 6 auf. Der erfindungsgemäße Sensor ist hier rein passiv ausgeführt, so dass nur über das empfangene elektrische Signal elektrische Energie zum Betrieb des Sensors gewonnen wird.

In vorgegebenen Zeitabständen sendet das Steuergerät mittels der Sende- /Empfangsstation 2 und der Antenne 3 eine Hochfrequenzimpuls ab, der von der Antenne 4 empfangen wird und das Sensierungselement 5 mit elektrischer Energie versorgt, so dass das Sensierungselement 5 damit eine Messung durchführt. Das Sensierungselement 5 ist so ausgestaltet, dass die Druckbelegung die empfangene elektrische Energie über das Sensierungselement 5 so moduliert, dass daraus auf den Druck oder die entsprechende Verformung des Sensorelements geschlossen werden kann. Um auch dieses modulierte Signal wieder zurückzusenden, ist der Reflektor 6 vorhanden und zwar über eine Verzögerungsleitung, die dafür sorgt, dass über die Antenne 4 das Signal dann auch wieder zu der Antenne 3 und damit zum Steuergerät zurück übertragen wird. Folglich wird ein augesendeter Impuls von der Antenne 3 durch den erfindungsgemäßen Sensor moduliert und wieder zurück übertragen, so dass aus dieser Modulation das Steuergerät mit dem Prozessor 1 daraus auf den aufgebrachten Druck auf den Sensor schließen kann.

Die Sende- /Empfangsvorrichtung 2 erzeugt ein Hochfrequenzimpuls mittels eines Oszilators, wenn die Sende- /Empfangsvorrichtung 2 ein entsprechendes Signal vom Prozessor 1 erhält, dass es diesen Sendeimpuls ausstrahlen soll. Die Leistung des Hochfrequenzimpulses ist dabei so ausgelegt, dass das vom Sensor zurückgestrahlte Signal noch empfangen werden kann, also genügend Leistung hat um im Rauschen für die Sende-/Empfangsstation 2 erkennbar zu sein. Das empfangene Signal wird dann von der Sende- /Empfangsvorrichtung 2 gefiltert, verstärkt und auf eine Zwischenfrequenz heruntergemischt, um es dort zu digitalisieren. Als Datenstrom wird dann das empfangene Signal an den Prozessor 1 übertragen, der die Demodulation an dem empfangenen Signal durchführt, um damit die Druckbelegung im Sitz zu erkennen.

Die Sende-/Empfangsvorrichtung 2 kann beispielsweise als Etnpfangstechnik die Korrelation verwenden, um ein schwaches Signal aus dem Rauschen herausfiltern zu können. Da sich durch den Druck die Laufzeit des Signals im erfindungsgemäßen Sensor entsprechend ändert, kann eine Laufzeitmessung zur Bestimmung des Drucks verwendet werden. Werden mehrere Sensoren verwendet, kann durch ein spezielles Design des Reflektors das reflektierte Signal entsprechend codiert werden, um die Identifikation beim Auslesen mehrerer Sensoren zu ermöglichen.

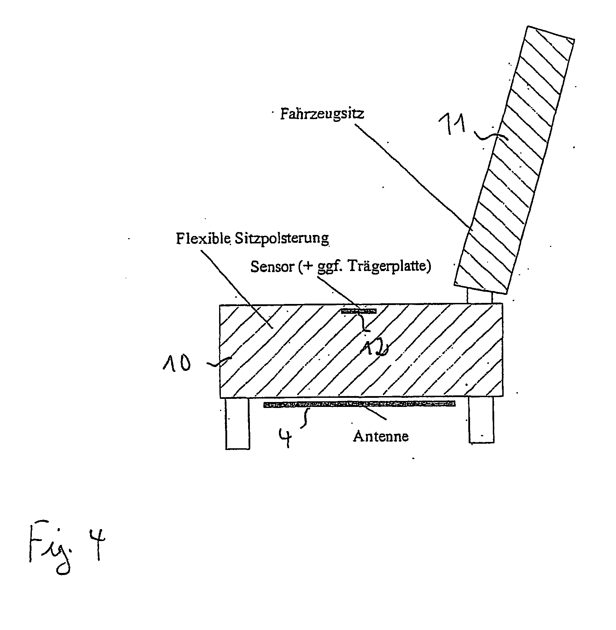

Figur 2 zeigt nun in einem ersten Ausführungsbeispiel wie der erfindungsgemäße Sensor gestaltet ist. Die Antenne 4 ist hier als Dipolantenne ausgebildet und über Leitungen an eine Interdigitalstruktur 5 als dem Sensierungselement angeschlossen. Die Interdigitalstruktur 5 ist in einem Abstand Dl zu dem Reflektor 6 auf einem piezoelektrischem Substrat angeordnet. Es wird hier also ein akustisches Oberflächenwellenbauelement beschrieben. Solche Sensoren basieren auf der Änderung der Eigenschaften, das ist die Ausbreitungsgeschwindigkeit, einer akustischen Oberflächenwelle auf einem piezoelektrischen Substrat, hier mit einer typischen Größe von 3 * 3 * 0,5 mm².

Durch die Ausübung von Druck bzw. Verformung des Substrats kommt es zu unterschiedlichen Verzögerungszeiten der Oberflächenwelle. Daher wird eine drahtlose Verzögerungsleitung mit dem Reflektor 6 realisiert, so dass bei einer elektrischen Anregung eines Oberflächenwellenpakets durch den Interdigitalwandler 5 das Wellenpaket nach einer durch den doppelten Abstand zwischen dem Interdigitalwandler 5 und dem Reflektor 6 charakterisierten Verzögerungszeit erneut beim Interdigitalwandler 5 ankommt. Sowohl die Funktion des Interdigitalwandlers 5 als auch die des Reflektors basiert auf der durch des piezoelektrischen Effekts ermöglichten e-lektroakkustischen Kopplung zwischen mechanischer Deformation des Substrats und den elektrischen Ladungen auf den metallisierten Strukturen des Interdigitalwandlers 5 bzw. Reflektors 6.

Verbindet man den Interdigitalwandler 5 wie hier geschehen mit der Antenne 4, kann die Anregung durch eine über die Antenne 4 empfangenen Hochfrequenzimpuls erfolgen, welcher nach Durchlaufen der Strecke zum Reflektor 6 und zurück zum Interdigitalwandler 5 erneut von der Antenne 4 abgestrahlt wird. Dieser Hochfrequenzimpuls kann vorteilhafterweise durch dasselbe Gerät welches des Anregungsimpuls gesendet hat, also das Steuergerät, empfangen werden. Das Steuergerät mit dem Prozessor 1, der Sende- /Empfangsvorrichtung 2 und der Antenne 3 erfüllt damit die Funktion eines Transceivers.

Durch spezielles Design des Reflektors 6 kann das reflektierte Signal codiert werden, was zur Identifikation beim gleichzeitigen Auslesen mehrerer Sensoren genutzt werden kann. Die Laufzeit des Signals ändert sich entsprechend dem Druck bzw. der Verformung welcher das piezoelektrische Substrat unterworfen ist. Auf diese Weise kann eine drahtlose Drucksensierung erfolgen. Wahlweise kann das Substrat dazu auch auf einen Träger aufgebracht werden, z.B. einem plattenförmigen, welcher sich entsprechend eines angewandten Drucks verformt. Sensor ggf. mit dem Träger und Antenne, z.B. eine Drahtantenne, können vorteilhaft in einem Sitz eines Fahrzeugs dermaßen integriert werden, dass bei Belegung des Sitzes ein Druck auf dem Sensor ausgeübt wird. Auf diese Weise lässt sich drahtlos die Belegung eines Sitzes sowie ggf. die Art der Belegung also auch Erwachsener, Kind oder Gegenstand erkennen.

Wie in Figur 3 gezeigt können außer SAW-Sensoren auch drahtlos auslesbare planare LC-Resonatoren, also elektrische Resonatoren zum Einsatz kommen. Solche Resonatoren bestehen aus einem Resonanzkreis, der von einer Spule in Figur 3 mit L bezeichnet und einem Kondensator in Figur 3 mit C bezeichnet, gebildet wird, die in Dickschichttechnik auf einem Keramikplättchen aufgebracht werden. Für die Anregung des Resonators wird eine Antenne verwendet, die über die Leitung 9 angeschlossen wird. Für die Anregung des Resonators wird die Antenne verwendet, über die ein elektromagnetisches Anregungsfeld abgestrahlt wird. Über die Messung der Antennenimpedanz kann auf die Resonanzfrequenz des LC-Resonators geschlossen werden. Wird der Resonator aus einer steifen Keramikplatte, die die Resonatorspule bildet, und einer Platte eines Kondensators und einer darüberliegenden flexiblen Folie, auf die die zweite Platte des Kondensators aufgedruckt ist, gebildet, so bewirkt der Druck auf die flexible Folie einer Veränderung der Resonanzfrequenz. Somit kann über die Messung der Resonanzfrequenz auf den Druck geschlossen werden. Dies ist in Figur 3 dargestellt, da die Folie hier mit 7 bezeichnet ist und das die Keramikplatte mit 8.

Figur 3 zeigt wie in einem.Fahrzeugsitz 11 der erfindungsgemäße Sensor mit seiner Antenne angeordnet ist. Der erfindungsgemäße Sensor ggf. mit einer Trägerplatte 12 ist unter der Oberfläche einer flexiblen Sitzpolsterung 10 angeordnet. Die Antenne 4, die über Leitungen mit dem Sensor 12 verbunden ist, ist an der Unterseite des Sitzes angeordnet. Gemäß der empfangenen Frequenz wird die Antenne 4 ausgebildet.

## Patentansprüche

1. Sensor zur Sitzbelegungserkennung, wobei der Sensor wenigstens ein Sensierungselement (5) aufweist, das in Abhängigkeit von einen Sitz aufgebrachten Druck ein Signal erzeugt, **dadurch gekennzeichnet, dass** der wenigstens eine Sensor passiv ausgebildet ist und
**dass** der wenigstens eine Sensor (12) wenigstens eine erste Antenne (4) zur drahtlosen Abfrage des Signals aufweist.

2. Sensor nach Anspruch 1, **dadurch gekennzeichnet, dass** das Sensierungselement (5) als Oberflächenfilter (SAW) ausgebildet ist.

3. Sensor nach Anspruch 1, **dadurch gekennzeichnet, dass** das Sensierungselement als elektrischer Resonator (L, C) ausgebildet ist.

4. Sensor nach einem der Ansprüche 1 bis 3, **dadurch gekennzeichnet, dass** das Sensierungselement (5) in einer Interdigitalstruktur ausgeführt ist.

5. Sensor nach einem der Ansprüche 1 bis 4, **dadurch gekennzeichnet, dass** die erste Antenne (4) auf ein Hochfrequenzsignal abgestimmt ist.

6. Sensor nach einem der vorhergehenden Ansprüche, **dadurch gekennzeichnet, dass** der Sensor (12) an Array von Sensierungselementen aufweist.

7. Steuergerät für einen Sensor zur Sitzbelegungserkennung nach einem der Ansprüche 1 bis 6, **dadurch gekennzeichnet, dass** das Steuergerät (1, 2, 3) eine zweite Antenne (3) zur Abgabe einer Abfrage an den Sensor (12) und zum Empfang des Signals aufweist.

8. Vorrichtung zur Sitzbelegungserkennung nach einem der Ansprüche 1 bis 6 und nach Anspruch 7.

## Claims

1. Sensor for detecting seat occupancy, wherein the sensor has at least one sensing element (5) which generates a signal as a function of pressure applied to a seat, **characterized in that** the at least one sensor is passive, and **in that** the at least one sensor (12) has at least one first antenna (4) for wirefree interrogation of the signal.

2. Sensor according to Claim 1, **characterized in that** the sensing element (5) is in the form of a surface filter (SAW).

3. Sensor according to Claim 1, **characterized in that** the sensing element is in the form of an electrical resonator (L, C).

4. Sensor according to one of Claims 1 to 3, **characterized in that** the sensing element (5) is embodied in an interdigital structure.

5. Sensor according to one of Claims 1 to 4, **characterized in that** the first antenna (4) is tuned to a high-frequency signal.

6. Sensor according to one of the preceding claims, **characterized in that** the sensor (12) has an array of sensing elements.

7. Controller for a sensor for detecting seat occupancy according to one of Claims 1 to 6, **characterized in that** the controller (1, 2, 3) has a second antenna (3) for outputting a request to the sensor (12) and for receiving the signal.

8. Apparatus for detecting seat occupancy according to one of Claims 1 to 6 and according to Claim 7.

## Revendications

1. Détecteur pour la reconnaissance d'occupation d'un siège, comportant au moins un élément sensible (5) qui produit un signal en relation avec une pression appliquée sur un siège,
**caractérisé en ce qu'**
au moins un détecteur est passif et ce détecteur (12) présente au moins une première antenne (4) destinée à l'interrogation sans fil du signal.

2. Détecteur selon la revendication 1,
**caractérisé en ce que**
l'élément sensible (5) est constitué par un filtre de surface (SAW).

3. Détecteur selon la revendication 1,
**caractérisé en ce que**
l'élément sensible (5) est constitué par un résonateur électrique (L, C).

4. Détecteur selon une des revendications 1 à 3,
**caractérisé en ce que**
l'élément sensible (5) présente une structure imbriquée.

5. Détecteur selon une des revendications 1 à 4,
**caractérisé en ce que**
la première antenne (4) est accordée sur un signal de haute fréquence.

6. Détecteur selon une des revendications précédentes,
**caractérisé en ce que**
le détecteur (12) présente un réseau d'éléments sensibles.

7. Appareil de commande pour un détecteur destiné à la reconnaissance d'occupation d'un siège selon une des revendications 1 à 6,
**caractérisé en ce que**
l'appareil de commande (1, 2, 3) présente une seconde antenne (3) destinée à transmettre une interrogation au détecteur (12) et à recevoir le signal.

8. Dispositif pour la reconnaissance d'occupation d'un siège, comportant un détecteur selon l'une des revendications 1 à 6, ou un appareil selon la revendication 7.
